Europäisches Patentamt

European Patent Office

Office européen des brevets

(19)

(11) **EP 1 297 755 A1**

(12) **EUROPEAN PATENT APPLICATION**

(43) Date of publication:
**02.04.2003 Bulletin 2003/14**

(51) Int Cl.[7]: **A23L 1/222**, A23L 1/221,
A23L 2/06, C11B 9/02

(21) Application number: **02021845.9**

(22) Date of filing: **27.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **28.09.2001 JP 2001300513**

(71) Applicant: **POKKA CORPORATION**
**Nagoya-shi Aichi-ken (JP)**

(72) Inventors:
• **Inoue, Takashi**
**Tokoname-shi, Aichi-ken (JP)**

• **Yasuda, Yuichi**
**Inazawa-shi, Aichi-ken (JP)**
• **Yamaguchi, Kenji**
**Shikatsu-cho, Nishikasugai-gun Aichi-ken (JP)**
• **Niida, Joju**
**Ichinomiya-shi, Aichi-ken (JP)**

(74) Representative: **VOSSIUS & PARTNER**
**Siebertstrasse 4**
**81675 München (DE)**

(54) **Process for producing citrus flavours and their use**

(57)     A flavor material or flavor derived from a citrus fruit is itself deoxidized, or production thereof is conducted in a deoxidized atmosphere to inhibit oxidation thereof, and the resulting deoxidized flavor material or flavor is added to inhibit oxidation of foods, drinks, aromatic products and medicines, thereby the oxidation of these products is inhibited; namely an oxidation inhibitor and a browning inhibitor comprising the deoxidized flavor material or flavor as an effective ingredient can be provided.

**EP 1 297 755 A1**

**Description**

The present invention relates to a process for producing a citrus flavor material or flavor derived from a citrus fruit or a method for treating them, and the use of them obtained.

More specifically, the invention provides a novel citrus flavor material or flavor derived from a citrus fruit whose oxidation is inhibited by first being deoxidized, and which prevents browning of ingredients of a product in which the citrus flavor material or flavor is added, improves the antioxidation ability of the product and further prevents the change of the ingredients of the product, and provides a product such as food , drinks and aromatic products in which the citrus flavor material or flavor is added.

It is well known that oxidation induces deterioration of a flavor and a taste or browning in the field of food, drinks and aromatic products, and a relation between oxidation and carcinogenesis is also pointed out. In general, for inhibiting them, additives having effects for inhibiting them have been so far added and used. For example, oxidation inhibitors or antioxidants such as ascorbic acid and vitamin E have been actually used.

In view of recent requirements of consumers and society for natural products, healthy products and priority to safety, an object of the invention is to develop an excellent new system which can inhibit deterioration of flavor and taste, browning and oxidation and which substitutes additives.

This object could be achieved on the basis of the finding that when production of flavor materials and flavors derived from citrus fruits is conducted in a deoxidized atmosphere or flavor materials and flavors themselves are subjected to replacement with an inert gas, oxidation is controlled. On top of that, it has been found unexpectedly that when the thus-treated flavor material or flavor is added to food and drinks, deterioration of qualities, oxidation and reduction of vitamin C of the resulting food and drinks are inhibited, in other words, the deoxidized citrus flavor materials and flavors have an outstanding activity to prevent oxidation, deterioration of qualities and reduction of vitamin C, and moreover that these activities are obtained with a small amount of the flavor material or flavor.

In view of the requirement for effectively utilizing foods ordinarily used and natural materials upon minimizing addition of conventional additives such as an oxidation inhibitor or an antioxidant in the art, the invention using citrus flavor materials and flavors often employed in food or drinks and subjected to physical deoxidation treatment no doubt meets the needs in the art.

That is, as one of the outlines of the invention, the following fact is mentioned: With respect to oil formed in squeezing the peel of a citrus fruit, or oil and aroma recovered at the stage of concentration of juice squeezed, the step of squeezing the peel and the step of recovering essence oil and essence aroma from a squeezed straight juice are conducted in a deoxidized atmosphere. Or with respect to the resulting oil and aroma, a gas dissolved in the oil and the aroma is replaced with an inert gas (e.g. nitrogen, carbon dioxide, argon or helium) before use for aromatizing, whereby deterioration of flavor or browning of food , drinks or aromatic products containing the thus-treated oil and/or aroma is inhibited, and the antioxidation activity of these products is improved.

The invention is described in detail below.

In the invention, flavor materials and flavors prepared from citrus fruits are used. The citrus fruits include all fruits belonging to Rutaceae and its subfamily. The following fruits are listed, though not limited: lime, lemon, grapefruit, sweetie, Citrus maxima, Banpeiyu (a kind of pummelos), Citrus hassaku, Citrus natsudaidai, Amanatsukan, sweet orange, Citrus iyo, Citrus junos, Citrus sudachi, Citrus kabosu, Citrus unshiu and ponkan. In addition, kumquat is also included in the invention.

In the invention, the citrus flavor material includes, for example, the following:

1. peel oil obtained from the peel, including peel oil containing water added in peeling citrus fruit and/or squeezing the peel;
2. substances obtained by subjecting the peel oil in the above 1 to dehydration treatment (e.g., centrifugation) and/or treatment to remove wax;
3. substances obtained by subjecting the substances in the above 2 to distillation, extraction or fractionation;
4. a water (i.e., recovered liquid) removed in concentrating juice squeezed, and a concentrate thereof;
5. distillates obtained by distilling the water or the concentrate in the above 4;
6. oil phases and water phases separated from the distillates in the above 5; and
7. a mixture of at least two flavor materials selected from the above 1 to 6.

In the invention, the flavor includes, for example, various products (flavors: e.g., essence, emulsified flavor) prepared by utilizing any one of the above 1 to 7, or extract obtained by subjecting any one of the above 1 to 7 to extraction with ethyl alcohol. In the production of said various products, one or more substances elected from aromatic compounds, artificial flavors, blenders, modifiers, adjuvants, fixatives, plant oils, solvents (e.g., ethyl alcohol) and other additives (e.g., emulsifiers, coloring agents) are used, if occasion demands.

The flavor material and flavor in the present invention are a flavorous component ( s ) which can be obtained from a citrus fruit, or a composition containing said flavorous component(s); said flavorous component(s) is(are) present chiefly in the peel, especially in the oil glands, of a citrus fruit.

The deoxidized flavor materials and flavors of the present invention may be provided in the final form of liquid, or may be provided in the final form of gel, capsule or powder prepared from the liquid form.

The flavor material includes, as described above, (A) oil obtained by squeezing the peel (peel oil) and (B) flavor material derived from a water (recovered liquid) obtained by concentrating a straight juice (squeezed juice) obtained in the squeezing step (essence oil and essence aroma). These treated products are also included in the flavor material of the invention.

For example, in (A), in addition to cold pressed peel oil (CP oil) obtained by dehydrating and dewaxing peel oil, folded CP oil obtained by removing mainly terpenes from CP oil by treatment such as distillation or extraction, parts (fractions) obtained by fractionating CP oil and natural isolate obtained by further isolating effective ingredients of the fractions into individual compounds are also included in the flavor material.

Further, in (B), aromatic compounds are dissolved in a large amount of water (recovered liquid) removed during the concentration step of straight juice (squeezed juice), and can be recovered by fractional distillation as a fraction having a high content of aromatic compounds. This fraction can be separated into a slight oil phase portion as an upper phase and a water phase portion as a lower phase through solid-liquid separation (e.g., by allowing to stand or centrifugation). The former oil phase portion is essence oil, and the latter water phase portion is an essence aroma. Accordingly, in the invention, both the essence oil and the essence aroma are included in the flavor material. Still further, fold essence oil and fold essence aroma obtained by concentrating these are also included in the flavor material.

In practicing the invention, the flavor material and flavor have to be deoxidized. The deoxidation step includes, as examples, the following methods.

The process of obtaining the flavor materials derived from the peel of citrus fruits is conducted by any one of

(1) a method in which gas (oxygen) dissolved in a flavor material obtained is replaced with an inert gas,
(2) a method in which the whole process is conducted in a deoxidized atmosphere, and
(3) a method using a combination of (1) and (2).

The process of recovering flavor materials from a water removed in concentrating the squeezed juice of citrus fruits is conducted by any one of

(1) a method in which gas (oxygen) dissolved in a flavor material recovered is replaced with an inert gas,
(2) a method in which the whole process (including the squeezing stage) is conducted in a deoxidized atmosphere, and
(3) a method using a combination of (1) and (2).

Moreover, in producing a product (e.g., drink) packed in an airtight container(s), containing the deoxidized flavor material or flavor added, if the production is conducted in the deoxidized atmosphere and/or if gas (oxygen) dissolved in materials (e.g., juice, water, sugar) to prepare the product and container is replaced with an inert gas, an effect of inhibiting deterioration of qualities of the product itself and an antioxidation ability are increased.

The inert gas used in the invention includes nitrogen, carbon dioxide, argon and helium.

Regarding the replacing means using an inert gas, a stripping device, a static mixer, a multi-jet mixer and the like in which an inert gas is directly blown into a matter to be treated (e.g., the flavor material, materials for product) are listed. Needless to say, it is preferable to minimize the amount of dissolved oxygen in the matter. When it can be 10 ppm or less, preferably 5 ppm or less, the replacing means is not particularly limited to those described above, and degassing treatment such as vacuum degassing is also available.

With respect to a method in which the deoxidized atmosphere is provided, air in a sealed tank and/or piping is previously replaced with an inert gas, or degassed, followed by filling an inert gas. Further, a raw material(s), a squeezed liquid, the flavor material or flavor and an intermediately treated product are put in a previously deoxidized tank, and the deoxidized atmosphere is maintained even in the treatment within the tank. At this time, it is preferable that the whole process including the squeezing stage is carried out in the deoxidized atmosphere. However, a part(s) of the process may be carried out in the deoxidized atmosphere as required. In addition, when air (oxygen) in the head spaces of containers and further air (oxygen) in empty containers are degassed and/or replaced with an inert gas, better results are obtained.

The steps except the replacement with the inert gas and/or the treatment in the deoxidized atmosphere and the sealing in the desired step(s) are performed by ordinary methods, whereby the high-quality flavor material or flavor according to the invention can be produced. That is, the deoxidized flavor material or flavor according to the invention is a high-quality one capable of maintaining the inherent fragrance and taste without oxidation, and can itself be used for ordinary purposes by being added to, or mixed with food drinks, aromatic products and medicines as a flavor or a further-processed product thereof.

Moreover, the deoxidized flavor material and flavor produced as described above can control or inhibit their own oxidation. In addition, the deoxidized flavor material and flavor have quite a novel and outstanding activity that when they are added to food , drinks, aromatic products and medicines, oxidation, browning, deterioration of qualities, and reduction of vitamin C of these products can be controlled or inhibited, and besides, the amount thereof can be small. Accordingly, the deoxidized flavor material or flavor according to the invention can be used as epochal and unique effective ingredient of various agents which inhibits or controls at least one of oxidation, browning, deterioration of qualities and reduction of vitamin C.

Therefore, the oxidation inhibitor, the browning inhibitor, the quality deterioration inhibitor or the vitamin C reduction inhibitor (in the invention, control is also included in the inhibition) containing the deoxidized flavor material or flavor according to the invention as an effective ingredient has an excellent inhibition effect, and it is satisfactorily effective even in a small amount. Accordingly, it is possible to use the deoxidized flavor material or flavor without spoiling the inherent flavor of a product to which the deoxidized flavor material or flavor is added (incidentally, when it is used as a flavor (e.g., essence), a necessary and desired amount can be used).

The deoxidized flavor material or flavor produced in the invention can be utilized in the production of food , drinks, aromatic products and medicines. Especially, the addition to fruit drinks is effective for inhibiting the browning of the drinks. Products to which the deoxidized flavor material or flavor is added include the following. Because the flavor materials and flavors of the invention are not toxic, the addition amount thereof is not limited. An effective addition amount is employed in compliance with the aim of the use. Generally, an appropriate addition amount of the non-dehydrated flavor material of the invention (e.g., peel oil dewaxed, essence aroma) is 20 to 90 w/w % (in %, i.e., the ratio in the resultant product in which it is added). Generally, an appropriate addition amount of the dehydrated flavor material or flavor of the invention (e.g., CP oil, essence oil) is 0.001 to 30 w/w % (in %); especially, in the case of drinks, an appropriate addition amount is 0.001 to 2 w/w % (in %), preferably 0.005 to 0.3 w/w % (in %).

Fruit drinks: fruit juices (100% juice), fruit mix juices (100% juice), fruit juices containing fruit chips (100% juice), fruit and vegetable mix juices (100% juice); fruit juice drinks (fruit juice content: at least 10% and less than 100%); soft drinks (fruit juice content: less than 10%); carbonated drinks; flavored drinks (flavored water, flavored tea, flavored coffee); alcohol drinks; jellies; jelly drinks; jams; syrups; confectionery such as cakes; cookies; ices; and seasonings (dressings, ponsu).

Aromatic products: cosmetics, toiletries, detergents, aromatics and deodorants.

Examples of the invention are described below.

Example 1

1. Into 15 kg of CP oil (dehydrated and dewaxed) prepared from lemon peel, was blown nitrogen gas (nitrogen gas 1 kgf/cm$^2$, bubbling for 10 min. at 10ℓ/min.).

2. 30g of the obtained nitrogen gas-substituted CP oil was added to 27.0 kg of concentrated lemon juice (Bx.37), followed by addition of ion-exchanged water to gauge up to 100ℓ in total. The resultant mixture (100ℓ, from-concentrate 100% lemon juice) was sterilized at 93°C for 5 seconds and then hot-packed into bottles.

Example 2

1. Into 15 kg of CP oil (dehydrated and dewaxed) prepared from lemon peel, was blown nitrogen gas (nitrogen gas 1 kgf/cm$^2$, bubbling for 10 min. at 10 ℓ/min.)

2. 30 g of the nitrogen gas-substituted CP oil was added to 27.0 kg of concentrated lemon juice (Bx. 37, subjected in advance to nitrogen gas-substitution), followed by addition of ion-exchanged water (subjected in advance to nitrogen gas-substitution) to gauge up to 100ℓ in total. The resultant mixture (100ℓ, from-concentrate 100% lemon juice) was sterilized at 93°C for 5 seconds and then hot-packed into bottles (subjected in advance to nitrogen gas-substitution to remove air in empty bottles).

The whole process of the above process 2 was conducted in a nitrogen gas atmosphere.

Comparative Example

The bottled products were produced in the same manner as in Example 1, provided that CP oil was not subjected to nitrogen gas-substitution.

The thus-obtained products are Controls.

<Effect of inhibiting browning>

Using Example 1, Example 2 and Comparative Example (Control), an effect of inhibiting browning was identified. A YI value in measuring a color difference is shown as an index of browning (Table 1).

Also, three types of samples, a sample just after production, a sample after the lapse of 7 days at 45°C and a sample after the lapse of 14 days at 45°C were used.

(Table 1)

|  | Comparative Example | Example 1 | Example 2 |
|---|---|---|---|
| Just after production | 45.77 | 45.65 | 44.70 |
| 45°C, 7 days | 72.55 | 70.64 | 67.14 |
| 45°C, 14 days | 93.39 | 89.61 | 80.69 |

Table 1 indicates that the smaller the YI value, the lesser the degree of browning. As is clear from the foregoing results, in Example 1, the browning is retarded in the accelerated lapse of time as compared to Comparative Example (Control). Further, in Example 2, the browning can be inhibited synergistically.

<Results of antioxidation ability>

The antioxidation ability was identified using the samples in Example 1, Example 2 and Comparative Example (Control). The antioxidation ability was measured using DPPH in the test.

Measuring method: 100 μl of each sample was distributed, and 100 μl of distilled water was added. Further, 800 μl of 0.1 M Tris buffer solution (pH 7.4) was added, and 1 ml of 500 μM DPPH (1,1-diphenyl-2-picrylhydrazyl) was added. The solution was allowed to stand in a dark room for 20 minutes, and subjected to HPLC.

With respect to the HPLC conditions, the antioxidation ability was found from an area of an absorption peak of DPPH at a detection wavelength of 517 nm with a mobile phase of water:methanol = 3:7, a column: octyl column and a flow rate of 1 ml/min.

The results of measuring the antioxidation ability are shown on condition that the results in Comparative Example (Control) are rated as 100% (Table 2).

Also, two types of samples, a sample just after production and a sample after the lapse of 7 days at 45°C were used.

(Table 2)

|  | Comparative Example | Example 1 | Example 2 |
|---|---|---|---|
| Just after production | 100 | 114 | 123 |
| 45°C, 7 days | 100 | 179 | 168 |

As is apparent from the foregoing results, DPPH radical scavenging activity, namely the antioxidation ability just after production and after the accelerated lapse of 7 days at 45°C is high in both Examples 1 and 2 in comparison to Comparative Example (Control). This fact suggested that the ingredients in the liquid is less deteriorated and is good for health when consumers eat and drink it.

<Effect of controlling a reduction rate of vitamin C that inhibits change of fruit juice>

Using the samples in Example 1 and Comparative Example (Control), the reduction rate of vitamin C was tested with the product before the lapse of time and the product after the accelerated lapse of time (45°C, 1 week), and measured by HPLC.

| Conditions of HPLC | |
|---|---|
| UV detector (at 250 nm) | |
| mobile phase | acetonitrile:50 mM $NH_4H_2PO_4$ = 75:25 |

(continued)

| Conditions of HPLC | |
|---|---|
| UV detector (at 250 nm) | |
| column | Polyamine-II column |
| flow rate | 1 ml/min |
| temperature | 34°C |

The vitamin C content of each sample is shown in Table 3 below. The residual rate (%) of vitamin C is shown in parentheses.

(Table 3)

| | Vitamin C concentration (ppm) | |
|---|---|---|
| | before the lapse of time | 45°C, 1 week (corres. to room temp., 4 months) |
| Comparative Example | 327.18 | 255.48 (78.09) |
| Example 1 | 322.49 | 297.51 (92.25) |

From the foregoing results, it was found that in view of the residual rate of vitamin C, vitamin C remained in the sample of Example 1 with almost no reduction even after the lapse of time and the sample was therefore less influenced by oxygen and radicals. It was further found that in the sample of Comparative Example (Control) vitamin C was reduced after the lapse of time. The production of the flavor material was conducted in the deoxidized atmosphere and/or the flavor material was subjected to replacement with the inert gas, whereby the resulting flavor material was less influenced by oxygen and occurrence of radicals was reduced. Consequently, it is considered that the flavor material of the invention controls the oxidation reaction and the radical reaction of foods, drinks or aromatic products per se containing the flavor material of the invention.

Example 3

A distillate containing aromatic compounds, which is an example of the flavor material of the invention, was produced by the following process;

```
        lemon fruit, 500 kg
              ↓
  (1)   obtaining peel oil (emulsion)
                      by pelatrice ←   while sprinkling
              ↓                           the filtrate
  (2)   filtrating the peel oil by a finisher      ↑
              ↓                                     |
  (3)   recovering the filtrate → circulating ——————┘
              ↓
        obtaining the peel oil (emulsion), 120 kg
              ↓
        storing the peel oil at 6°C for a week
              ↓
        filtrating the cold peel oil to remove wax
```

```
                  by using a 60-mesh filter

                              ↓

                  obtaining the filtrate, 116 kg

                              ↓

                  distilling the filtrate (1 kg) by using an evaporator

                  under reduced pressure (pressure: 25 mmHg,

                  water bath temperature: 40°C)

                              ↓

                  obtaining the distillate (emulsion), 948 g

                              ↓

                  packing the distillate into containers

                              ↓

                  freezing and storing the containers in a freezer
```

Conditions of nitrogen gas atmosphere in step (1):

nitrogen gas: 3 kgf/cm$^2$
flow rate: 50 liters/min.

Conditions of nitrogen gas atmosphere in step (2):

nitrogen gas: 3 kgf/cm$^2$
flow rate: 30 liters/min.

Conditions of nitrogen gas atmosphere and substitution in step (3):
The recovered filtrate was upto into a tank (the air in the tank has been in advance replaced with nitrogen gas) and nitrogen gas was blown into the filtrate put in the tank.

nitrogen gas: 3 kgf/cm$^3$
flow rate: 30 liters/min.

Example 4

Production of a drink beverage using nitrogen gas substituted commercial lemon flavor

Commercial lemon flavor (Lemon Tetrarome 100% Fab, Firmenich S.A.) was procured, and dissolved gas was substituted with nitrogen gas (nitrogen gas 1 kgf/cm$^2$, bubbling for 10 min. at a flow rate of 5 liters/min).
3.0 g of the nitrogen gas substituted flavor was added to 223 g of concentrated lemon juice (Bx. 43), followed by addition of deionized water to so that total weight was 1 kg.
The resultant juice (from-concentrate 100% lemon juice) was sterilized at 93°C for 5 seconds, and then hot-packed in glass bottles.

Control

As a control, juice was produced as in Example 4, except that the commercial lemon flavor was not subjected to nitrogen gas-substitution.

Test

Using the resultant juice just after production, the juice after the lapse of 1 week at 45°C and the juice after the lapse of 2 weeks at 45°C, the effect of inhibiting browning and the residual amount of vitamin C were measured.

Inhibition of browning

500 µl of one sample was mixed with 500 µl of ethanol, and the mixture was centrifuged at 15,000 rpm for 10 minutes. The resultant supernatant liquid was measured with a spectrophotometer (detection wavelength: 420 nm).

The absorbance of each sample is shown in the following table. Numbers in parenthesizes indicate change (%) in absorbance.

| | Absorbance (ABS) | | |
|---|---|---|---|
| | Just after production | 45°C, 1 week | 45°C, 2 weeks |
| Control | 0.197 | 0.216 (110%) | 0.277 (141%) |
| Example 4 | 0.200 | 0.210 (105%) | 0.256 (128%) |

When browning takes place, the absorbance is increased.

The table reveals that the rate of change in absorbance in Example 4 is lower than in the Control, showing that the browning is inhibited.

Consequently, even when drinks are produced by an ordinary process without conducting nitrogen gas substitution, the oxidative deterioration can effectively be inhibited with the use of the nitrogen gas-substituted flavor (even a small amount of the flavor exhibited the effect).

Residual amount of vitamin C

The measurement was performed by the following titration method.

Two drops (0.2 ml) of a 1% starch solution were added to 5 ml of a sample (lemon juice), and the titration was conducted with 0.005 mol/liter of an iodine solution.

The titration amount when the solution turned bluish purple was made the endpoint, this amount was read out, and the concentration of reductive vitamin C of lemon juice was calculated from this titration amount using the following formula.

$$\text{Vitamin C (ppm)} = \frac{\text{Titration amount (ml)} \times 0.8806 \times 1000}{1.01 \times 5 (\text{ml of lemon juice})}$$

| | Vitamin C concentration (ppm) | | |
|---|---|---|---|
| | Just after production | 45°C, 1 week | 45°C, 2 weeks |
| Control | 653.9 | 592.9 (90.7%) | 584.2 (89.3%) |
| Example 4 | 638.2 | 636.5 (99.7%) | 610.3 (95.6%) |

From the residual amount of vitamin C, it was found that by the use of the nitrogen gas substituted flavor, vitamin C remains in drinks produced by the ordinary process.

Upon using a nitrogen gas substituted flavor in production of drinks, changes in the composition of drinks can be inhibited without conducting nitrogen gas-substitution during production of the drinks per se.

Example 5

Production of drinks using water (recovered liquid) obtained in concentration of fruit juice and carrying out nitrogen substitution through the whole process

500 kg of lemon was extracted with an in-line juice extractor to obtain 150 kg of lemon juice (Bx. 9.4).

2 kg of the resultant lemon juice was subjected to vacuum concentration at 85°C and 25 mmHg to obtain 562 g of concentrated lemon juice (Bx. 33.4) and 1,438 g of water (recovered liquid).

Dissolved gas contained in 1,438 g of the resultant water (recovered liquid) was substituted with nitrogen gas (nitrogen gas 1 kgf/cm$^2$, bubbling for 10 min. at a flow rate of 10 liters/min.).

777 g of the nitrogen gas-substituted water (recovered liquid) was added to 223 g of concentrated lemon juice (Bx. 43) to form 1 kg of lemon juice. Dissolved gas contained in the juice was then substituted with nitrogen gas (nitrogen gas 1 kgf/cm$^2$, bubbling for 10 min. at a flow rate of 5 liters/min.).

The resultant juice (from-concentrate 100% lemon juice) was sterilized at 93°C for 5 seconds, and then hot-packed into glass bottles (empty bottles subjected in advance to substitution of air with nitrogen).

Control

As a control, juice was produced as in Example 4, except that the water (recovered liquid) was not subjected to nitrogen gas-substitution.

Test

Using the resultant juice just after production, the juice after the lapse of 1 week at 45°C and the juice after the lapse of 2 weeks at 45°C, an effect this juice in inhibiting browning and a residual amount of reductive vitamin C were measured.

Effect of inhibiting browning

500 μl of a sample was mixed with 500 μl of ethanol, and the mixture was centrifuged at 15,000 rpm for 10 minutes. The resultant supernatant liquid was measured with a spectrophotometer (detection wavelength: 420 nm).

The absorbance of each sample is shown in the following table. Numbers in parenthesizes indicate change (%) in absorbance.

| | Absorbance (ABS) | | |
| --- | --- | --- | --- |
| | Just after production | 45°C, 1 week | 45°C, 2 weeks |
| Control | 0.211 | 0.241 (114%) | 0.270 (128%) |
| Example 5 | 0.213 | 0.226 (106%) | 0.253 (119%) |

When browning takes place, the absorbance is increased.

The table reveals that the change in absorbance in Example 5 is lower than in the Control, showing that browning is inhibited.

Residual amount of vitamin C

The measurement was conducted as in Example 4.

| | Vitamin C concentration (ppm) | | |
| --- | --- | --- | --- |
| | Just after production | 45°C, 1 week | 45°C, 2 weeks |
| Control | 645.2 | 603.3 (93.5%) | 575.4 (89.2%) |
| Example 5 | 662.6 | 626.0 (94.5%) | 601.6 (90.8%) |

From the residual amount of reductive vitamin C, it is evident that upon using the nitrogen gas substituted aroma, vitamin C remains in drinks.

Effects of the Invention

It was identified that the oxidative deterioration of the flavor material and flavor could be inhibited by producing them in deoxidated atmosphere.

Further, it was found for the first time that the use of the flavor material (e.g., CP oil, essence oil, essence aroma) produced in deoxidized atmosphere or the flavor material in which the dissolved gas (oxygen) was replaced with inert gas could inhibit deterioration of flavor and taste of products (e.g., drink) in which it is added, further inhibit the browning and improve the antioxidation ability of the product.

Especially, the browning of fruit juices can be inhibited. This is effective in the case of packing the same into PET containers or bottles through which the liquid packed can be seen, thereby making it possible to alleviate complaints from consumers owing to color change of the fruit juice ingredients . Further, the deterioration of qualities of ingredients in the liquid can be controlled (inhibition of decomposition of vitamin C and sugar, and so forth) by improving the antioxidation ability of the liquid.

The flavor material or flavor of the invention can exhibit an effect to inhibit browning or oxidation in the use of a small amount thereof. Accordingly, it can be said that food and drinks can be produced at good efficiency, and the food and drinks containing the flavor material or flavor of the invention are good for health of consumers.

**Claims**

1. A method for producing a citrus flavor material or flavor which comprises

   (1) oxygen dissolved in a flavor material or flavor prepared from the peel of a citrus fruit is replaced with an inert gas, and/or
   (2) the whole process or a part(s) thereof to prepare said flavor material or flavor in (1) from the citrus fruit is (are) conducted in a deoxidized atmosphere.

2. A method for producing a citrus flavor material or flavor which comprises

   (1) oxygen dissolved in a flavor material or flavor prepared from a water removed in concentrating juice squeezed from a citrus fruit is replaced with an inert gas, and/or
   (2) the whole process or a part(s) thereof to prepare said flavor material or flavor in (1) from the citrus fruit is (are) conducted in a deoxidized atmosphere.

3. A citrus flavor material or flavor obtainable by the method according to claim 1.

4. A citrus flavor material or flavor obtainable by the method according to claim 2.

5. A member selected from the group consisting of an agent for inhibiting browning, an antioxidant and an agent for controlling the reduction rate of vitamin C, which comprises the citrus flavor material or flavor according to claim 3 or 4 as an effective ingredient.

6. A member selected from the group consisting of a food, a drink, a cosmetic, a toiletry, a detergent, an aromatic, a deodorant and a medicine packed in a container sealed, to which the citrus flavor material or flavor according to claim 3 or 4 is added.

7. The member according to claim 6, which is a fruit drink.

**European Patent Office**

## EUROPEAN SEARCH REPORT

Application Number

EP 02 02 1845

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 899 398 A (COLE EDWARD L ET AL) 12 August 1975 (1975-08-12) * column 1, line 33 - line 38 * * column 2, line 11 - line 45 * * examples II,III,IV * | 1,3,5-7 | A23L1/222 A23L1/221 A23L2/06 C11B9/02 |
| X | US 5 021 251 A (MCKENNA RONALD J ET AL) 4 June 1991 (1991-06-04) * column 1, line 42 - line 52 * * column 3, line 1 - line 20 * | 1,3,5-7 | |
| X | US 4 463 025 A (STROBEL RUDOLF G K) 31 July 1984 (1984-07-31) * column 5, line 5 - line 50 * * column 7, line 63 - column 9, line 59 * | 2,4-7 | |
| A | FR 2 134 941 A (BARBAT DU CLOSEL HENRY) 8 December 1972 (1972-12-08) * page 2, line 18 - line 29 * | 1-7 | |
| A | US 2 292 460 A (MCKINNIS RONALD B) 11 August 1942 (1942-08-11) * page 1, left-hand column, line 21 - page 2, left-hand column, line 5; figures * | 1-7 | TECHNICAL FIELDS SEARCHED (Int.Cl.7) A23L C11B |
| A | DATABASE WPI Section Ch, Week 198939 Derwent Publications Ltd., London, GB; Class D13, AN 1989-282434 XP002226297 & JP 01 206976 A (NIPPON KAJITSU KAKO), 21 August 1989 (1989-08-21) * abstract * | 1-7 | |

-/--

The present search report has been drawn up for all claims

| Place of search | Date of completion of the search | Examiner |
|---|---|---|
| MUNICH | 7 January 2003 | Popa, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 02 02 1845

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KAUR C., KAPOOR H.C.: "Antioxidants in fruits and vegetables - the millenium's health" INTERNATIONAL JOURNAL OF FOOD SCIENCE AND TECHNOLOGY, vol. 36, 2001, pages 703-725, XP002226296 * page 708, left-hand column, last paragraph * | 5 | |
| A | PATENT ABSTRACTS OF JAPAN vol. 1997, no. 06, 30 June 1997 (1997-06-30) & JP 09 048969 A (POKKA CORP), 18 February 1997 (1997-02-18) * abstract * | 5 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 7 January 2003 | Popa, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 1845

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2003

| Patent document cited in search report | | Publication date | Patent family member(s) | | Publication date |
|---|---|---|---|---|---|
| US 3899398 | A | 12-08-1975 | NONE | | |
| US 5021251 | A | 04-06-1991 | NONE | | |
| US 4463025 | A | 31-07-1984 | AT | 15968 T | 15-10-1985 |
| | | | AU | 554478 B2 | 21-08-1986 |
| | | | AU | 7332881 A | 18-11-1982 |
| | | | CA | 1170103 A1 | 03-07-1984 |
| | | | DE | 3172610 D1 | 14-11-1985 |
| | | | EP | 0044747 A2 | 27-01-1982 |
| | | | ES | 8303051 A1 | 01-05-1983 |
| | | | ES | 8305567 A1 | 16-07-1983 |
| | | | FI | 812300 A ,B, | 23-01-1982 |
| | | | GR | 74957 A1 | 12-07-1984 |
| | | | IE | 51868 B1 | 15-04-1987 |
| | | | NO | 812518 A ,B, | 25-01-1982 |
| | | | PH | 22729 A | 28-11-1988 |
| | | | US | 4569853 A | 11-02-1986 |
| | | | JP | 1050394 B | 30-10-1989 |
| | | | JP | 1565820 C | 25-06-1990 |
| | | | JP | 57115168 A | 17-07-1982 |
| | | | MX | 7088 E | 28-05-1987 |
| FR 2134941 | A | 08-12-1972 | FR | 2134941 A5 | 08-12-1972 |
| | | | CH | 548168 A | 30-04-1974 |
| | | | DE | 2214944 A1 | 09-11-1972 |
| | | | IT | 1052681 B | 20-07-1981 |
| US 2292460 | A | 11-08-1942 | NONE | | |
| JP 1206976 | A | 21-08-1989 | NONE | | |
| JP 09048969 | A | 18-02-1997 | NONE | | |

EPO FORM P0459

For more details about this annex : see Official Journal of the European Patent Office, No. 12/82